# EUROPÄISCHE PATENTSCHRIFT

(11) **EP 0 988 689 B1**
(45) Veröffentlichungstag und Bekanntmachung des Hinweises auf die Patenterteilung: **06.05.2004**
(21) Anmeldenummer: 98936329.6
(22) Anmeldetag: 12.06.1998
(51) Int. Cl.: H02P 6/18, H02P 5/05, H02P 7/05

(54) **RELUKTANZMOTOR**
RELUCTANCE MOTOR
MOTEUR A RELUCTANCE

(30) Priorität: 13.06.1997 DE 19725113; 10.06.1998 DE 19825926
(43) Veröffentlichungstag der Anmeldung: 29.03.2000
(73) Patentinhaber: Vorwerk & Co. Interholding GmbH, 42275 Wuppertal (DE)
(72) Erfinder: SCHIFFARTH, Markus, D-58332 Schwelm (DE)
(74) Vertreter: Müller, Enno, Dipl.-Ing.
(86) Internationale Anmeldenummer: PCT/EP1998/003538
(87) Internationale Veröffentlichungsnummer: WO 1998/057419

(56) Entgegenhaltungen:
- EP-A- 0 534 761
- US-A- 5 525 887
- PANDA ET AL.: "SWITCHED RELUCTANCE MOTOR DRIVE WITHOUT DIRECT ROTOR POSITION SENSING" 1990 IEEE INDUSTRY APPLICATIONS SOCIETY ANNUAL MEETING, Bd. 1, Nr. 25, 7. - 12. Dezember 1990, Seiten 525-530, XP000204076 Seattle
- PANDA ET AL.: "Waveform detection technique for indirect rotor-position sensing of switched-reluctance motor drives" IEEE PROCEEDINGS-B, Bd. 140, Nr. 1, Januar 1993, Seiten 80-88, XP000304286 Stevenage

## Beschreibung

Die Erfindung betrifft ein Verfahren zur Steuerung eines Reluktanzmotors nach den Merkmalen des Oberbegriffes des Anspruches 1.

Bei geschalteten Reluktanzmotoren, welche allgemein bekannt sind, hängt die Größe des Drehmomentes von der Lage des Rotors zum Statorfeld ab. Um das maximale Moment im Motor zu erreichen, müssen die Statorströme und damit das Statorfeld abhängig von der Rotorlage gesteuert werden. Die Information über die Rotorlage wird der Schalteinrichtung für die Statorströme bei herkömmlichen Methoden über einen Sensor mitgeteilt, der auf dem Rotor montiert ist. Derartige Motoren sind heute käuflich zu erwerben und stellen den aktuellen Stand der Technik dar. So ist bspw. in der EP 0 441970 B1 ein Reluktanzmotor beschrieben, welcher als Rotorlagegeber ausgebildete Sensoren aufweist. Darüber hinaus sind aus der Literatur Methoden bekannt, den Lagegeber aus Kostengründen durch Berechnungsverfahren zu ersetzen, die ein mathematisches Modell des Motors enthalten, um durch Vergleich von berechneten und gemessenen Strömen und Spannungen am Motor eine Vorhersage über die aktuelle Motorlage machen zu können.

In einem Bericht Panda: "Switched Reluctance Motor Drive Without Direct Rotor Position Sensing", 1990 IEEE Industry Applications Society Annual Meeting, Band 1, Nr. 25, 7. - 12. October 1990, Seiten 525 - 530, Seattle, Washington, ist ein Verfahren zur Steuerung eines Reluktanzmotors nach den Merkmalen des Oberbegriffes des Anspruches 1 bekannt, bei welchem die gemessene Zeit, bis zum Erreichen eines maximalen Stromwertes, dazu ausgewertet wird, die Position des Reluktanzmotors zu ermitteln. Für die Erreichung einer optimalen Moment-Drehzahlcharakteristik wird es jedoch für erforderlich gehalten, noch Änderungen vorzunehmen und einen besonderen Controller zu entwickeln. Ausgehend hiervon ist Aufgabe der Erfindung, ein Verfahren zur Steuerung eines Reluktanzmotors anzugeben, das in einfacher Weise die Erreichung einer optimalen Moment-/Drehzahlcharakteristik ermöglicht.

Diese Aufgabe ist beim Gegenstand des Anspruches 1 gelöst. Hierbei ist darauf abgestellt, dass bei Aufprägung der Spannung die Zeit bis zum Erreichen des maximalen Stromwertes gemessen wird, dass die gemessene Zeit als Maß der Belastung des Motors herangezogen wird und dass der vordefinierte Strom durch Aus- und Einschalten der konstanten Spannung beibehalten wird, wobei die Spannung positiv ist und solange auf die Spule geschaltet wird, bis der maximale Stromwert überschritten wird und danach die Aus- und Einschaltung erfolgt, um den vordefinierten Strom zu halten. Durch diese Ausgestaltung ist ein geschalteter Reluktanzmotor gegeben, der einfach und kostengünstig ist. Ein Rotorlagegeber ist nicht erforderlich. Eine ausreichende Genauigkeit zur Bestimmung der Rotorlage ist gegeben. Bei bekannten Reluktanzmotoren mit Rotorlagegebern hat es sich als nachteilig erwiesen, dass der Rotorlagegeber sich besonders bei nicht gekapselten Motoren, wie bspw. in Reinigungsmaschinen, in einem schmutzzugänglichen Raum befindet und somit ausfallgefährdet ist. Die in der Literatur vorgestellte Steuerung mit einer modellberechneten Rotorlage erfordert einen erheblichen Rechenaufwand, der einen kostenintensiven Rechner in der Speiseeinrichtung erfordert. Außerdem gehen in die Berechnung die aktuellen Werte des Motorstromes und der Motorspannung ein, die zur exakten Berechnung sehr genau gemessen werden müssen. Dies führt neben der Rechnereinheit zu weiteren hohen Kosten für eine Meßeinrichtung. Die Grundidee vorliegender Erfindung beruht auf der Tatsache, dass die Induktivität einer Statorspule abhängig ist vom Luftspalt zwischen Rotor und Stator. Hieraus ergibt sich eine ständige Änderung der Induktivität bei einer Drehung des Rotors. Bei Belastung verschiebt sich der Winkel zwischen Rotor und Statorfeld, was eine Verringerung der Induktivität in der Statorspule beim Einschalten der Spannung zur Folge hat. Diese Änderung wird erfaßt. Weiter wird der vordefinierte Strom durch Aus- und Einschalten einer positiven Spannung beibehalten. Der (hieran schließt sich der Text der WO 98/57419, Zeile 70 an.) Strom in der Statorspule wird nach dem Pulsweitenmodulationsverfahren gesteuert. Bei diesem Verfahren werden die Spulen abwechselnd auf eine positive und negative konstante Spannung geschaltet. Der Strom erhöht sich mit der positiven Spannung und senkt sich umgekehrt mit der negativen Spannung ab. Aus dem Taktverhältnis zwischen Stromerhöhung und -absenkung ergibt sich die resultierende gewünschte Stromhöhe in der jeweiligen Spule. Im vorliegenden Verfahren wird ein Strom in einer definierten Höhe eingeprägt, indem die positive Spannung solange auf die Spule geschaltet wird, bis ein Maximalwert überschritten wird. Hiernach wird die Spannung abwechseln aus- und eingeschaltet, um den vordefinierten Stromwert zu halten. Die Zeit, die vom Einschalten der Spannung bis zum Erreichen des Maximalwertes vergeht, ist von der Induktivität abhängig. Bei Belastung verringert sich die Induktivität im Einschaltzeitpunkt. Aus dieser Veränderung kann die Belastung des Motors zwischen dem Einschalten der Spannung und dem Signal, daß der Maximalstrom erreicht ist bestimmt werden. In einer Weiterbildung des Erfindungsgegenstandes ist vorgesehen, daß bei Erreichen eines maximalen Stromwertes zur Verhinderung einer Motorüberlastung eine Drehzahlverringerung vorgenommen wird. Danach erfolgt die Drehzahlverringerung bevorzugt bei einem solchen maximalen Stromwert, der speziell auch eine Obergrenze der Belastbarkeit markiert und insofern als Grenzstrom I_{Grenz} bezeichnet wird. Um eine Überlastung des Motors zu vermeiden, kann demzufolge bei zu hoher Last die Drehzahl reduziert werden. Somit ist dieses Verfahren für alle Antriebe geeignet, bei denen die Lastdrehzahl abhängig ist, z.B. bei Antrieben mit drehzahlabhängiger Reibung oder insbesondere Lüfterantrieben. Weiter wird vorgeschlagen, daß die Zeitmessung durch Starten eines internen Zählers beim Einschalten der Spannung und Anhalten des Zählers bei Überschreiten des maximalen Stromwertes vorgenommen wird. Diese Zeitmessung kann in einfachster Weise durch eine Mikrocontrollersteuerung realisiert sein. Hierzu wird beim Einschalten der Spannung ein interner Zähler gestartet und beim Überschreiten des Maximalstromes gestoppt. Hierbei erweist es sich als vorteilhaft, daß, ausgelöst durch Erreichen eines Minimal-Zählerwertes, eine Drehzahlreduzierung gesteuert wird. Weiter wird vorgeschlagen, daß die Stromerfassung über einen Schwellwertschalter erfolgen kann. Letzterer kann weiter durch einen Widerstand und einen Transistor realisiert sein.

Nach dem bisher Gesagten wird die Zeitmessung bis zum Überschreiten eines Maximalstromes, der den vordefinierten Strom um eine gewisse Größe übersteigen kann, als Maß für die Belastung des Motors herangezogen. Ausgehend von der damit bekannten Belastung des Motors kann der lastabhängige Verschiebungswinkel zwischen Rotor und Statorfeld ermittelt werden und eine Regelung der Statorströme zur Erzielung einer bevorzugten Winkellage des Statorfeldes zum Rotor erfolgen. Bevorzugt ist eine derartige Lage des Statorfeldes zum Rotor, bei der das maximale Moment im Motor erreicht wird. Insofern besteht erfindungsgemäß die Möglichkeit einer Steuerung der Statorströme in Abhängigkeit von der gemessenen Zeit des Stromanstiegs vom Anlegen der Spannung bis zum Erreichen des Maximalstromes.

Falls die Last bzw. die Belastung des Motors zu groß wird, kann - wie oben ausgeführt - die Drehzahl des Reluktanzmotors vermindert werden. Dadurch wird vorteilhaft ein "Außer-Tritt-Fallen" des Rotors zum Statorfeld verhindert, wobei davon ausgegangen wird, daß der Strom auf einen Festwert geregelt wird und die Zeitmessung bis zum Erreichen des dem Festwert zugeordneten Maximalwertes durchgeführt wird.

Als Erweiterung dazu kann die Stromerfassung jedoch auch mehrstufig oder stufenlos ausgeführt werden. Wird ein zunächst vordefinierter Strom bzw. der zugeordnete Maximalstrom nach Einschalten der Spannung nach so kurzer Zeit erreicht, daß daraus auf eine im Hinblick auf ein mögliches "Außer-Tritt-Fallen" des Rotors unzulässig hohe Belastung des Motors geschlossen wird, besteht zunächst weiterhin die Möglichkeit, die Drehzahl zur Lastreduzierung zu erniedrigen. Alternativ oder kombinativ besteht jedoch auch die Möglichkeit, den Gesamtstrom und damit das Motormoment zu erhöhen. Die Erhöhung des Gesamtstromes und damit des Motormomentes kann sowohl stufenweise als auch stufenlos ausgeführt werden. Sofern auch nach erfolgter Erhöhung des Gesamtstromes noch eine zu hohe Belastung des Motors ermittelt wird, kann entsprechend eine weitere bzw. mehrfache Erhöhung des Gesamtstromes und damit des Motormomentes erfolgen. Dabei ist bevorzugt, daß erst beim Erreichen eines kritischen und somit eine Obergrenze bildenden Grenzstromes, der durch den verwendeten Umrichter oder die Motorerwärmung gegeben sein kann, eine Reduzierung der Drehzahl in der oben beschriebenen Weise erfolgt, so daß eine Beschädigung des Motors und des Umrichters verhindert wird. Durch die Anpassung des effektiven Motorstromes an das geforderte Moment sinkt die Erwärmung des Motors und des Umrichters. Als weiterer Vorteil kann der Motor mit höherer Leistung betrieben werden, d.h. besser ausgenutzt werden, und der Wirkungsgrad erhöht sich, wodurch Energie eingespart werden kann.

Nach dem oben erläuterten Gegenstand der Erfindung werden die Statorströme eines Reluktanzmotors mittels eines Umrichters gesteuert. Darüber hinaus ist erfindungsgemäß die Möglichkeit vorgesehen, daß die erläuterte Steuerung für einen Reluktanzmotor auch für mehrere Reluktanzmotoren an einem gemeinsamen Umrichter verwendet wird. Dabei wird der Stromanstieg an jedem an den Umrichter angeschlossenen Motor separat gemessen, so daß eine separate Lastauswertung an jedem Motor erfolgt. Wird die Belastung in einem Motor zu groß, wird die bisher beschriebene Drehzahlreduzierung und/oder Stromerhöhung angewendet. Da alle Motoren von einem Umrichter gespeist werden, laufen sie stets mit der gleichen Drehzahl, was in zahlreichen Anwendungen mit Vorteilen verbunden ist oder sogar vorgeschrieben sein kann. Eine gemeinsame Ansteuerung mehrerer Motoren mit einem Umrichter ermöglicht weiterhin eine deutliche Kostenreduzierung gegenüber einer Ansteuerung von Einzelmotoren mit separaten Umrichtern. Eine mögliche Anwendung eines Antriebes mit mehreren, von einem gemeinsamen Umrichter gesteuerten Reluktanzmotoren besteht beispielsweise in einem Bodenreinigungsgerät.

Nachfolgend ist die Erfindung anhand der beigefügten Zeichnungen exemplarisch näher erläutert. Es zeigt:
- Fig. 1: einen schematisch dargestellten Reluktanzmotor mit einem Rotor und einem Stator;
- Fig. 2: Kennlinien des Reluktanzmotors in unbelastetem Zustand desselben, die Induktivität, die Momente und den Strom in Abhängigkeit von der Winkelstellung zwischen Rotor und Stator betreffend;
- Fig. 3: eine der Fig. 2 entsprechende Kennliniendarstellung, jedoch bei Belastung des Reluktanzmotors;
- Fig. 4: Kennlinien zur Darstellung des Verlaufs einer Spannung an einer Spule und des daraus resultierenden Spulenstromes,
- Fig. 5: zwei in Zeitabhängigkeit dargestellte Stromkennlinien, ohne und mit Belastung des Reluktanzmotors;
- Fig. 6: eine weitere in Zeitabhängigkeit dargestellte Stromkennlinie;
- Fig. 7: ein Schaltbild für eine beispielhafte Stromerfassung;
- Fig. 8: zwei in Zeitabhängigkeit dargestellte Stromkennlinien mit zwei unterschiedlichen vordefinierten Stromwerten;
- Fig. 9: ein Schaltbild für eine Ansteuerung von drei Reluktanzmotoren durch einen gemeinsamen Umrichter.

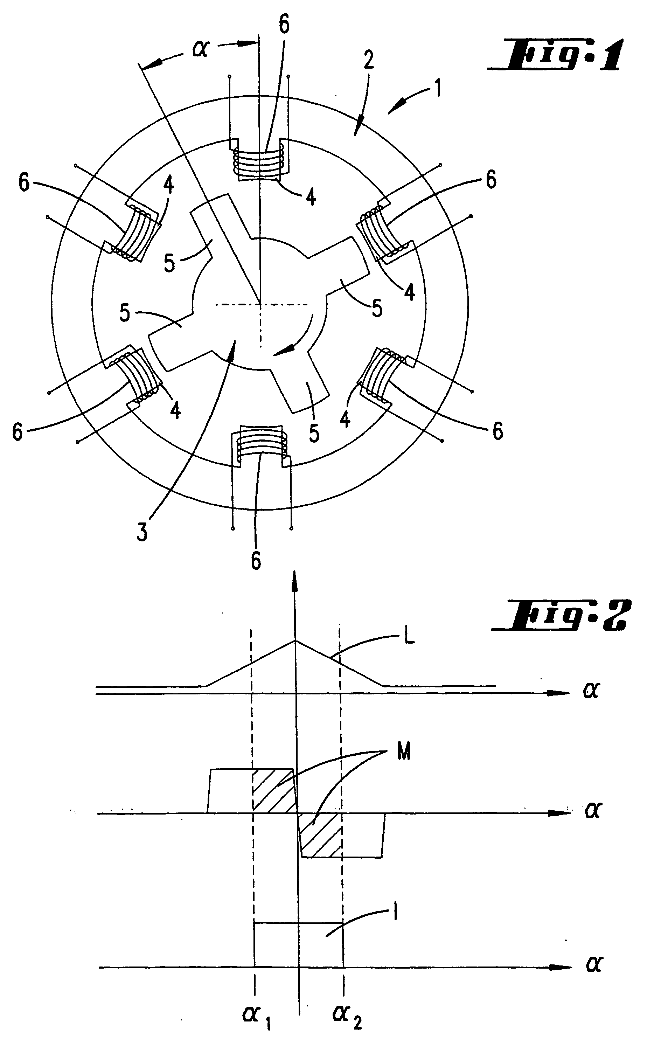

Der in Fig. 1 dargestellte Reluktanzmotor 1 setzt sich im wesentlichen aus einem Stator 2 und einem Rotor 3 zusammen, mit ausgeprägten Stator- und Rotorpolen 4, 5 in ungleicher Anzahl. In Fig. 1 ist ein typischer Aufbau eines 6/4-poligen Motors 1 dargestellt.

Da die Induktivität L einer jeden auf einen Statorpol 4 aufgebrachten Statorspule 6 von der Länge des Luftspaltes zwischen Rotor 3 und Stator 2 bzw. zwischen Rotorpol 5 und Statorpol 4 abhängt, ändert sich diese Induktivität L mit der Rotordrehung.

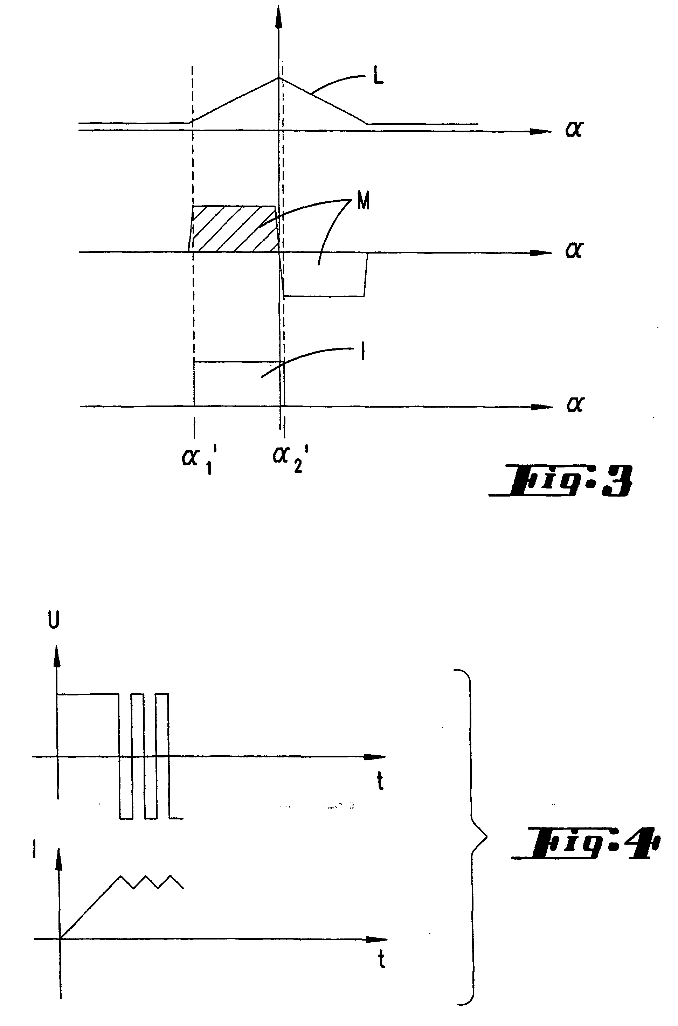

Bei der vorliegenden Erfindung wird ein Stromblock in einer konstanten Höhe ohne Rücksicht auf die genaue Rotorlage in die Statorspule 6 gespeist. Hiernach richtet sich der Rotor 3 entsprechend der Belastung aus. Ohne Last kompensieren sich positives und negatives Moment M zu Null. Dieses Verhältnis von eingespeistem Stromblock I und von diesem abgedeckten, sich zu Null kompensierenden Moment ist in der Fig. 2 dargestellt.
Es ist zu erkennen, daß die Stromeinspeisung zu gleichen Winkeln Alpha 1 und Alpha 2 beidseitig des Wendepunktes, welcher der genauen Gegenüberlage von Rotorpol 5 und Statorpol 4 entspricht, erfolgt.

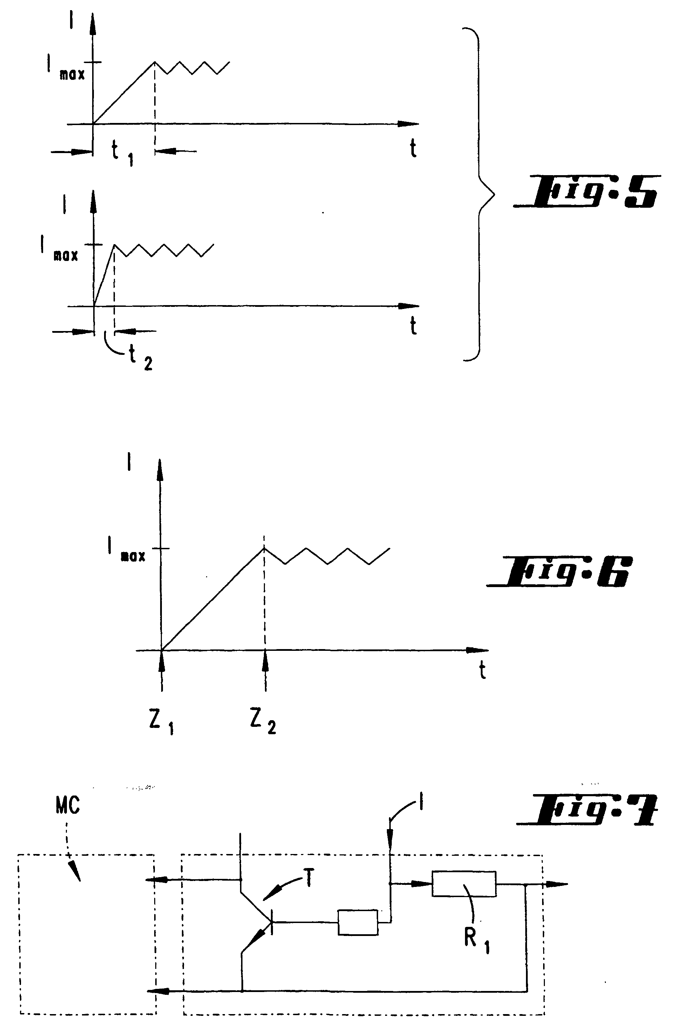

Fig. 3 zeigt Kennlinien bei Belastung des Reluktanzmotors 1. Hierbei verschiebt sich der Winkel zwischen Rotor und Statorfeld, so daß im Mittel positives Moment M zur Deckung der Last benutzt wird. Aufgrund dieser Verschiebung verringert sich die Induktivität L im Einschaltzeitpunkt von Alpha 1 (ohne Last, siehe Fig. 2) zu Alpha 1' (mit Last, siehe Fig. 3).

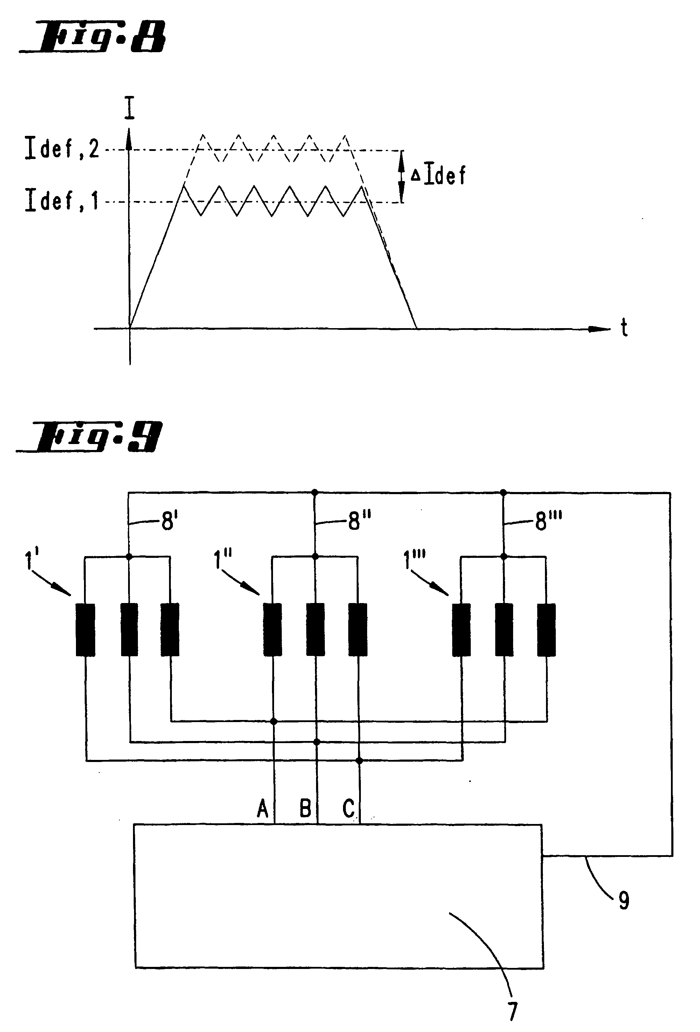

Diese Änderung wird wie folgt gemessen:
Der Strom I in der Statorspule 6 wird nach dem Pulsweitenmodulationsverfahren gesteuert. Bei diesem Verfahren werden die Spulen 6 abwechselnd auf eine positive und negative konstante Spannung U geschaltet. Der Strom I erhöht sich mit der positiven Spannung und senkt sich umgekehrt mit der negativen Spannung ab. Aus dem Taktverhältnis zwischen Stromerhöhung und -absenkung ergibt sich die resultierende gewünschte Stromhöhe in der jeweiligen Spule 6. In Fig. 4 ist ein typischer Verlauf der Spannung U an einer Spule 6 und des daraus resultierenden Spulenstromes I in Abhängigkeit von der Zeit t dargestellt.

Erfindungsgemäß wird ein Strom I in einer definierten Höhe in die Spule 6 eingeprägt, indem die positive Spannung U solange auf die Spule 6 geschaltet wird, bis ein Maximalwert überschritten wird. Hiernach wird die Spannung U abwechselnd aus- und eingeschaltet, um den vordefinierten Stromwert I zu halten. Die Zeit, welche vom Einschalten der Spannung U bis zum Erreichen des Maximalwertes des Stromes I vergeht ist von der Induktivität L abhängig.

Wie aus den Fig. 2 und 3 zu erkennen, verringert sich die Induktivität L bei Belastung des Reluktanzmotors 1, bezogen auf den Einschaltpunkt Alpha 1 (ohne Last) und Alpha 1' (mit Last) des Stromes I. Aus dieser Veränderung kann die Belastung des Motors 1 durch Zeitmessung zwischen dem Einschalten der Spannung U und dem Signal, daß der Maximalstrom I erreicht ist, bestimmt werden.

Um eine Überlastung des Motors 1 zu vermeiden, kann bei zu hoher Last die Drehzahl reduziert werden. Somit ist dieses Verfahren für alle Antriebe geeignet, bei denen die Last drehzahlabhängig ist, z.B. bei Antrieben mit drehzahlabhängiger Reibung oder insbesondere bei Lüfterantrieben.

Die Zeitmessung kann in einfachster Weise durch eine Mikrocontrollersteuerung realisiert werden. Hierzu wird bei einem Einschalten der Spannung U ein interner Zähler gestartet und bei einem Überschreiten des Maximalstromes I Max gestoppt.

Fig. 5 zeigt zwei Stromkennlinien, welche in Abhängigkeit von der Zeit t abgetragen sind. Die obere Kennlinie betrifft die Stromaufnahme bei unbelastetem Motor 1. Hier wird der Maximalstrom I Max nach einer Zeit t1 erreicht. Aus der unteren Kennlinie ist zu erkennen, daß bei Belastung des Motors 1 die Zeit t2 bis zum Erreichen des Maximalstromes I Max wesentlich geringer ist als beim unbelasteten Motor.

Zur Messung dieser Zeit t1 oder t2 wird beim Einschalten der Spannung U, welches einen Stromfluß zur Folge hat, ein Zähler gestartet. Dieser Startpunkt ist in Fig. 6 mit Z1 bezeichnet. Bei Erreichen des Maximalstromes I Max wird dieser Zähler gestoppt (siehe Punkt Z2), Anhand des gemessenen Zeitwertes kann die Belastung des Motors 1 ermittelt werden.

Besonders einfach kann die Zeitmessung in einer Mikrocontrollersteuerung realisiert werden. Hierdurch kann die Drehzahl reduziert werden, sobald der Zählerstand einen Minimalwert unterschreitet, was eine direkete Folge der Belastung des Motors 1 ist.

Eine einfache Methode zur Messung des Stromes I ist in der Fig. 7 dargestellt, wobei dies im wesentlichen durch einen Meßwiderstand R1 und einen Transistor T mit einer Schwellspannung, wie bspw. einem Bipolartransistor, erreicht wird. Der Meßwiderstand R1 ist in diesem Ausführungsbeispiel an die Basis- und Emitteranschlüsse des Transistors T angeschlossen, welche Anschlüsse das Schwellwertverhalten (hier über die Basis-Emitterstrekke) besitzen. Beim Überschreiten eines bestimmten Stromes I schaltet der Transistor T aufgrund des Spannungsabfalls am Meßwiderstand R1 durch und gibt ein Signal an den Mikrocontroller MC, welcher die Spannung U an der Statorspule 6 umschaltet und den Zählerstop veranlaßt.

Die Erfindung zeichnet sich insbesondere dadurch aus, daß kein Rotorlagegeber im Antrieb erforderlich ist.
Die Stromerfassung erfolgt über einen Schwellwertschalter, welcher, wie beschrieben durch einen Widerstand und einen Transistor realisiert sein kann.

Mit Bezug auf Fig. 8 sind zwei Stromkennlinien zeitabhängig dargestellt, die sich auf zwei Betriebszustände eines Reluktanzmotors beziehen. Der mit einer durchgezogenen Linie dargestellte zeitliche Stromverlauf steigt von der Ordinate, die mit dem Zeitpunkt des Einschaltens der Spannung zusammenfällt, zunächst bis zu einem maximalen Stromwert an, von dem ausgehend durch abwechselndes Aus- und Einschalten der Spannung im Durchschnitt ein vordefinierter Stromwert I_{def,1} eingehalten wird. Sofern aufgrund der Höhe der Motorbelastung die Gefahr eines "Außer-Tritt-Fallens" des Rotors zum Statorfeld droht, kann entsprechend Fig. 8 eine Erhöhung des Gesamtstromes von dem bisherigen Wert I_{def,1} auf einen höheren Wert I_{def,2} erfolgen. Die entsprechende, gestrichelt dargestellte Stromkennlinie bezieht sich dabei wiederum auf den Zeitraum nach einem Einschalten der Spannung, so daß der von der Ordinaten ausgehende Anstieg in einem ersten Teilabschnitt deckungsgleich mit der durchgezogenen Kennlinie erfolgt. Durch die Erhöhung des Stromes von I_{def,1} auf I_{def,2} wird eine zugeordnete Erhöhung des Motormomentes erreicht, die bei Bedarf mehrfach wiederholt werden kann, bis ein der Belastung angemessenes, bzw. ein gewünschtes Motormoment erreicht worden ist. Die in Fig. 8 angegebene Differenz Delta I_{def} zwischen den Stromwerten I_{def,1} und I_{def,2} ist lediglich exemplarisch zu verstehen und steht in der Darstellung in keinem maßstäblichen Zusammenhang mit den Amplituden und Absolutwerten der Stromverläufe. Insbesondere besteht die Möglichkeit, eine derart feine Abstufung zwischen zeitlich nacheinander gewählten vordefinierten Stromwerten I_{def} zu verwenden, daß eine quasi stufenlose oder stufenlose Anpassung des vordefinierten Stromwertes ermöglicht wird. Neben einer bedarfsgerechten Erhöhung des vordefinierten Stromwertes besteht dabei natürlich auch die Möglichkeit einer entsprechenden bedarfsgerechten Absenkung etwa bei einem anfangs unnötig zu hoch gewählten vordefinierten Statorstrom oder beispielsweise bei einem plötzlichen Absinken der Motorbelastung.

In Fig. 9 ist ein beispielhaftes Schaltbild für eine Verschaltung von drei 4/6-poligen Reluktanzmotoren 1', 1'', 1''' an einem Umrichter 7 mit drei Stromerfassungen dargestellt. Für die jeweiligen Reluktanzmotoren 1', 1'', 1''' erfolgen danach separate Strommessungen an den Meßpunkten 8', 8'' und 8''', die mit einem an den Umrichter angeschlossenen Summenleiter 9 verbunden sind. In weiterer Einzelheit sind die gemeinsamen Anschlüsse der Phasen A, B und C der Reluktanzmotoren an den Umrichter dargestellt. Abweichend von der dargestellten Verschaltung besteht auch die Möglichkeit, eine andere Anzahl von Reluktanzmotoren über einen gemeinsamen Umrichter anzusteuern.

## Patentansprüche

1. Verfahren zur Steuerung eines Reluktanzmotors (1) mit einem Rotor (3) und einem Stator (2), wobei der Stator (2) einzelne Statorspulen (6) aufweist und je nach Belastung des Motors (1) ein vordefinierter Strom (I) in eine Spule (6) fließt, wobei weiter der vordefinierte Strom (I) aus der Aufprägung einer konstanten Spannung (U) resultiert, **dadurch gekennzeichnet, dass** bei Aufprägung der Spannung (U) die Zeit (t1, t2) bis zum Erreichen des maximalen Stromwertes (I Max) gemessen wird, dass die gemessene Zeit (t1, t2) als Maß der Belastung des Motors herangezogen wird und dass der vordefinierte Strom (I) durch Aus- und Einschalten der konstanten Spannung (U) beibehalten wird, wobei die Spannung (U) positiv ist und so lange auf die Spule geschaltet ist, bis der maximale Stromwert (I Max) überschritten wird und danach die Aus- und Einschaltung erfolgt, um den vordefinierten Strom zu halten.

2. Verfahren nach Anspruch 1, **dadurch gekennzeichnet, dass** bei Erreichen eines Grenzstromes (IGrenz) zur Verhinderung einer Motorüberlastung eine Drehzahlverringerung vorgenommen wird.

3. Verfahren nach einem der vorhergehenden Ansprüche, **dadurch gekennzeichnet, dass** die Zeitmessung durch Starten (Z1) eines internen Zählers beim Einschalten der Spannung (U) und Anhalten (Z2) des Zählers bei Überschreiten eines maximalen Stromwertes (IMax) vorgenommen wird.

4. Verfahren nach Anspruch 3, **dadurch gekennzeichnet, dass**, ausgelöst durch Erreichen eines Minimal-Zählerwertes, eine Drehzahlreduzierung gesteuert wird.

5. Verfahren nach einem der vorhergehenden Ansprüche, **dadurch gekennzeichnet, dass** eine Steuerung der Statorströme abhängig von der gemessenen Zeit (t1, t2) erfolgt.

6. Verfahren nach einem der vorhergehenden Ansprüche, **dadurch gekennzeichnet, dass** der vordefinierte Strom (I) veränderbar ist.

7. Verfahren nach Anspruch 6, **dadurch gekennzeichnet, dass** der vordefinierte Strom (I) stufenlos veränderbar ist.

8. Verfahren nach einem der vorhergehenden Ansprüche, **dadurch gekennzeichnet, dass** die Steuerung der Statorströme mittels eines Umrichters (7) erfolgt.

9. Verfahren nach Anspruch 8, **dadurch gekennzeichnet, dass** von dem Umrichter (7) mehrere drehzahlsynchrone Reluktanzmotoren (1', 1", 1''') angesteuert werden.

## Claims

1. Method for controlling a reluctance motor (1) having a rotor (3) and a stator (2), wherein the stator (2) has individual stator coils (6) and a predefined current (I) flows into a coil (6) in accordance with the loading of the motor (1), and wherein the predefined current (I) results from a constant voltage (U) being applied, **characterized in that**, when the voltage (U) is applied, the time (t1, t2) it takes to reach the maximum current value (Imax) is measured, **in that** the measured time (t1, t2) is used as a measure of the loading of the motor and **in that** the predefined current (I) is maintained by switching the constant voltage (U) off and on, wherein the voltage (U) is positive and is connected to the coil until the maximum current value (Imax) is exceeded and, after that, the switching off and on takes place to keep the predefined current.

2. Method according to Claim 1, **characterized in that**, when a limit current (Ilimit) is reached, a speed reduction is performed to prevent overloading of the motor.

3. Method according to one of the preceding claims, **characterized in that** the time measurement is performed by starting (Z1) an internal counter when the voltage (U) is switched on and stopping (Z2) the counter when the maximum current value (Imax) is exceeded.

4. Method according to Claim 3, **characterized in that** a speed reduction is controlled, triggered by reaching a minimum counter value.

5. Method according to one of the preceding claims, **characterized in that** a control of the stator current takes place dependent upon the measured time (t1, t2).

6. Method according to one of the preceding claims, **characterized in that** the predefined current (I) is variable.

7. Method according to Claim 6, **characterized in that** the predefined current (I) is infinitely variable.

8. Method according to one of the preceding claims, **characterized in that** the control of the stator currents takes place by means of a converter (7).

9. Method according to Claim 8, **characterized in that** a plurality of speed-synchronized reluctance motors (1', 1'', 1''') are controlled by the converter (7).

## Revendications

1. Procédé de commande d'un moteur à réluctance (1) comprenant un rotor (3) et un stator (2), le stator (2) présentant des bobines de stator (6) individuelles et, respectivement, selon la charge du moteur (1), une intensité (I) prédéfinie passant dans une bobine (6), sachant que, en outre, l'intensité (I) prédéfinie résulte de l'application d'une tension (U) constante, **caractérisé en ce que**, en cas d'application de la tension (U), le temps (t1, t2), s'écoulant jusqu'à atteindre la valeur d'intensité maximale (I Max), est mesuré, **en ce que** le temps (t1, t2) mesuré est utilisé comme indication quantitative du degré de charge du moteur, et **en ce que** l'intensité (I) prédéfinie est conservée par isolement et branchement de la tension constante (U), sachant que la tension (U) étant positive et branchée sur la bobine jusqu'à ce que l'on dépasse la valeur d'intensité maximale (I Max), et l'isolement et le branchement étant ensuite effectués pour maintenir l'intensité de valeur prédéfinie.

2. Procédé selon la revendication 1, **caractérisé en ce que**, lorsque une intensité limite (Ilimite) est atteinte, on effectue une diminution de la vitesse de rotation pour empêcher que le moteur subisse une surcharge.

3. Procédé selon l'une des revendications précédentes, **caractérisé en ce que** la mesure de temps est effectuée par démarrage (Z1) d'un compteur interne, lors du branchement de la tension (U) et arrêt (Z2) du compteur, en cas de dépassement d'une valeur d'intensité maximale (I Max).

4. Procédé selon la revendication 3, **caractérisé en ce qu'**une réduction de la vitesse de rotation est commandée, déclenchée par l'atteinte d'une valeur de compteur minimale.

5. Procédé selon l'une des revendications précédentes, **caractérisé en ce qu'**une commande des intensités de stator est effectuée en fonction du temps (t1, t2) mesuré.

6. Procédé selon l'une des revendications précédentes, **caractérisé en ce que** l'intensité (I) prédéfinie est modifiable.

7. Procédé selon la revendication 6, **caractérisé en ce que** l'intensité (I) prédéfinie est modifiable de façon progressive et continue.

8. Procédé selon l'une des revendications précédentes, **caractérisé en ce que** la commande des courants de stator est effectuée au moyen d'un convertisseur (7).

9. Procédé selon la revendication 8, **caractérisé en ce que** plusieurs moteurs à réluctance (1', 1", 1''') à vitesse de rotation synchrone sont commandés par le convertisseur ou convertisseur (7).
